(19) **Europäisches Patentamt**
**European Patent Office**
**Office européen des brevets**

(11) **EP 1 226 508 B1**

(12) **EUROPEAN PATENT SPECIFICATION**

(45) Date of publication and mention
of the grant of the patent:
**10.10.2018 Bulletin 2018/41**

(51) Int Cl.:
***G06T 11/20*** (2006.01)   ***H04N 1/00*** (2006.01)

(21) Application number: **00950850.8**

(86) International application number:
**PCT/US2000/020611**

(22) Date of filing: **28.07.2000**

(87) International publication number:
**WO 2001/009736 (08.02.2001 Gazette 2001/06)**

(54) **ADJUSTING CHARACTER DIMENSIONS TO COMPENSATE FOR LOW CONTRAST CHARACTER FEATURES**

EINSTELLUNG VON ZEICHENDIMENSIONEN UM NIEDRIGE KONTRASTMERKMALE DER ZEICHEN AUSZUGLEICHEN

REGLAGE DES DIMENSIONS DES CARACTERES POUR COMPENSER LES CARACTERISTIQUES A FAIBLE CONTRASTE DE CES CARACTERES

(84) Designated Contracting States:
**AT BE CH CY DE DK ES FI FR GB GR IE IT LI LU MC NL PT SE**

(30) Priority: **30.07.1999   US 364647**
**05.05.2000   US 565217**

(43) Date of publication of application:
**31.07.2002   Bulletin 2002/31**

(73) Proprietor: **Microsoft Technology Licensing, LLC Redmond, WA 98052 (US)**

(72) Inventors:
 • **PLATT, John, C.**
**Bellevue, WA 98005 (US)**

 • **DRESEVIC, Bodin**
**Bellevue, WA 98007 (US)**

(74) Representative: **Grünecker Patent- und Rechtsanwälte**
**PartG mbB**
**Leopoldstraße 4**
**80802 München (DE)**

(56) References cited:
**EP-A- 0 786 757    EP-A2- 0 640 934**
**WO-A-86/03614    US-A- 5 315 382**
**US-A- 5 889 885    US-A- 5 896 136**
**US-A- 6 040 818**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**BACKGROUND OF THE INVENTION**

**1. The Field of the Invention**

The present invention relates to display methods and apparatus and, more particularly, to methods and apparatus for improving the contrast with which relatively small-dimension character features are displayed on display devices which have multiple separately controllable luminance elements per pixel.

**2. The Prior State of the Art**

The display of images, e.g., text characters, on display devices is of high importance. This is particularly the case given the ever increasing use of computers and other types of devices which rely on displays to convey information.

Pixels are used to represent display images on a display device. The term pixel, which is short for picture-element, is commonly used to refer to one spot in, e.g., a rectangular grid of thousands of spots which can be used to represent an image. Pixels are normally used individually by a computer to form an image on the display device.

Color display devices have become the principal display devices of choice for most computer users. The display of color on a monitor is normally achieved by operating the display device to emit light, e.g., a combination of red, green, and blue light, which results in one or more colors being perceived by a human viewer.

In color displays, the intensity of the light emitted corresponding to the additive primary colors, red, green and blue, can be varied to get the appearance of almost any desired color pixel. Adding no color, i.e., emitting no light, produces a black pixel. Adding 100 percent of all three colors results in white.

In cathode ray tube (CRT) display devices, the different colors of light are generated via the use of phosphor coatings which may be applied as dots in a sequence on the screen of the CRT.

Liquid crystal displays (LCDs), or other flat panel display devices are commonly used in portable computer devices in the place of CRTs. This is because flat panel displays tend to be small and lightweight in comparison to CRT displays. In addition flat panel displays tend to consume less power than comparable sized CRT displays making them better suited for battery powered applications than CRT displays.

As the quality of flat panel color displays continues to increase and their cost decreases, flat panel displays are beginning to replace CRT displays in desktop applications. Accordingly, flat panel displays, and LCDs in particular, are becoming ever more common.

Unlike CRT displays, LCD displays use square or rectangular light emitters, usually positioned adjacent one another, as the source of red, green and blue light for each pixel. Due to manufacturing limitations with regard to the size of light emitters in LCD displays, it is difficult in an LCD display to achieve the same resolution commonly found in CRT displays.

Unfortunately, the limited resolution provided by commonly used flat panel displays such as LCDs tends to be less than ideal for the display of text. LCD display resolution problems are particularly noticeable when displaying text at small font sizes which are commonly used on personal data assistants and other hand held devices. When the size of a pixel is treated as the smallest unit of size which can be used to represent a position of a character or other image, the relatively large pixel size compared to the character size tends to produce characters with jagged edges.

The use of LCD displays with small characters can also produce less than desirable representations of, e.g., bold text. In the case of bold text it is desirable that bold character stems have stem weights that are 10-20% higher than the corresponding non-bold character stem. At small sizes a character stem may be only one or two pixels in width. Given such stem widths, adjustments in stem weights in one pixel size increments as is commonly done in the art, can lead to far more than the desired 10-20 percent increase in stem weight for bold characters.

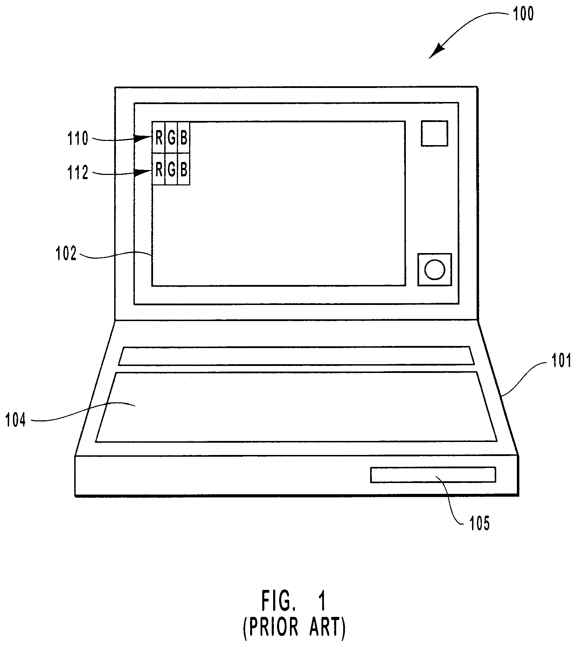

Figure 1 illustrates a known computer system 100 which comprises a housing 101, keyboard 104, disk drive 105 and an LCD display 102. The LCD display comprises a plurality of pixels, two of which are identified by reference numbers 110, 112. Each of the pixels 110, 112 includes separate red (R), green (G) and blue (B) pixel subcomponents which may be controlled as independent luminous intensity sources. In the computer system 100, the R, G and B pixel subcomponents are arranged to for vertical stripes.

In known systems, in the case of text, a high resolution representation of a text character, sometimes referred to as an analytic representation, is normally sampled. The samples are then used to generate luminous intensity values, e.g., red, green and blue pixel sub-component luminous intensity values, which control the light output of the R, G and B pixel sub-components of each pixel, respectively. In conventional systems, the R, G, and B pixel sub-component luminous intensity values are normally generated from the same set of image samples.

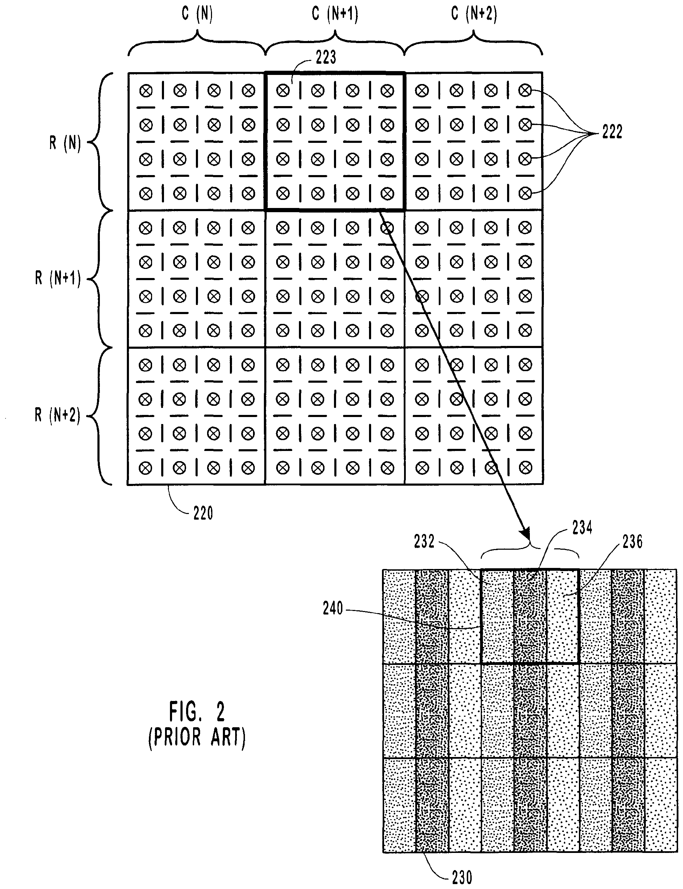

Figure 2 illustrates one known image rendering technique used to control the light output of a set of pixels. In Figure 2, the grid 220 represents a source image, e.g., a foreground/background color representation of a text character, which has been divided into segments corresponding to 3 rows R(N), R(N+1), R(N+2) and 3 columns C(N), C(N+1), C(N+2) of source image pixel segments. Each one of the 9 segments corresponds directly to one pixel, e.g., pixel 240, of the display screen represented by grid 230. Red, green and blue pixel sub-components 232, 234, 236 are illustrated in Figure 2 using medium, dark and light speckling, respectively.

In the known image rendering technique, each portion of a source image corresponding to a pixel, referred to herein as a source image pixel segment, is oversampled by a factor of 4 in the vertical and horizontal dimensions. Thus, a set of 16 samples, represented by the circles 222 with x's inside, is generated for each pixel.

The 16 samples corresponding to each pixel segment are then filtered to produce the red, green and blue luminous intensity values used to control pixel sub-components 232, 234, 236. The filtering of the samples is represented by the arrow extending from source image segment 223 to pixel 240. Thus, in the illustrated system, the same portion of the source image is used to generate each of the red, green and blue pixel sub-component luminous intensity values of a pixel. In the known Figure 2 system, the filtering performed to generate pixel sub-component luminous intensity values does not cross pixel boundaries indicated in the image 220 by the use of solid lines. Accordingly, the luminous intensity of each pixel is not affected by neighboring source image pixel segments. As will be discussed below, this allows different images, e.g., text characters, to be sampled, filtered, stored and then subsequently concatenated without impacting the filtering since the filtering does not depend on neighboring image portions beyond a pixel boundary.

As is known in the art, there are generally two stages associated with the display of text images, e.g., characters, 1) the glyph rendering stage and 2) the glyph display phase. The glyph rendering stage involves the generation of one or more character glyphs and the storage of the glyphs in a glyph cache for subsequent use, e.g., during the display phase. The glyph display phase involves retrieving glyphs from the font cache as need, and, in many cases, combining them prior to display to form text strings.

In the glyph rendering stage one or more character glyphs are rendered, i.e., generated, from corresponding high resolution representations, e.g., outline representations, of the rendered characters. The high resolution character representations from which characters are frequently rendered include character shape and size information. The shape information is frequently in the form of lines, points, curves and/or arcs. Areas within the character outline correspond to the foreground color while areas outside the character outline correspond to the background color.

As part of one known character glyph rendering process, the high resolution representation of the character image from which the glyph is being generated, is sampled multiple times per pixel in both the horizontal and vertical directions as illustrated in Figure 2. The samples corresponding to each pixel of an image are then filtered, e.g., summed, to perform a filtering operation. The value associated with each pixel resulting from the filtering operation is then stored, along with character spacing information, in a font glyph cache. In the known system one value, referred to as an alpha value, is generated per pixel as a result of the filtering operation.

Alpha values indicate the proportion of the foreground and the background color which contribute to the image area to which the alpha value corresponds. In the known system a single alpha value is generated for each pixel and is used to control the red, green and blue luminous intensity values of the pixel as a function of foreground and background colors which are subsequently applied.

Alpha values are usually normalized to a value in the range of 0-1 before being used in the application of foreground/background colors to a rendered character glyph. In the known system a normalized alpha value of 1 indicates that the region to which the alpha value corresponds is a foreground color region. A normalized alpha value of 0.5 indicates that the foreground and background colors contribute equally to the color of the region corresponding to the alpha value. In addition, a normalized alpha value of 0 indicates that the region to which the alpha value corresponds is a background color region.

In the known system, rendered glyphs, which S include character spacing information and one alpha value per pixel, are stored in a glyph cache. The stored alpha values are non-normalized values which are generated by summing the individual samples, having a value of 0 or 1, corresponding to a pixel region.

By storing rendered glyphs in a glyph cache, the known system avoids the need to render a character glyph each time it needs to be displayed, e.g., as part of a text string.

The second phase of rendering text, the glyph display phase, involves reading out glyphs from the glyph cache, applying foreground/background color selections, a gamma correction operation and then outputting the resulting values to a display buffer for storage until being used to control the display device to display the desired character images.

The above described process can be used to generate and display opaque or transparent characters. In the case of opaque characters, a uniform background color is applied. In the case of transparent characters, the background color may vary as a function of the background image over which the characters are placed.

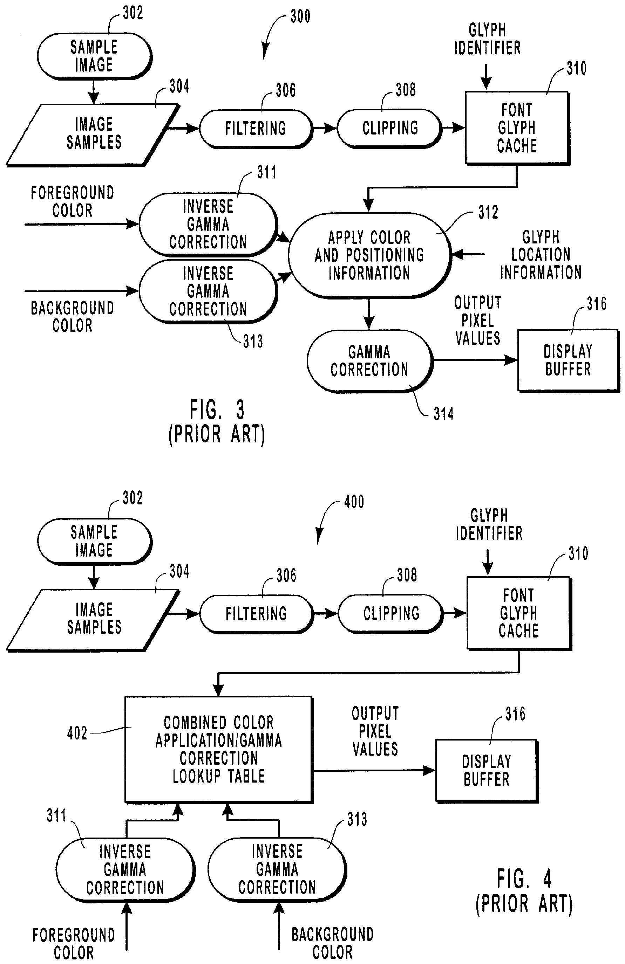

Figure 3 illustrates one known embodiment of the above described glyph rendering and displaying process as applied to rendering and displaying opaque characters. In Figure 3, and the various other process diagrams included in the present application, ovals are used to illustrate steps, rectangles are used to illustrate hardware devices, e.g., storage devices, and non-rectangular parallelograms are used to represent data, information, or other values.

The known process 300 begins in step 302 with the sampling of source image pixel segments of a character image. The pixel segments are sampled at a rate of 4x in both the horizontal and vertical directions 15 as illustrated in Figure 2. The image samples (16 per pixel) 304 are then filtered in step 306 using a box filter to produce a value between 0 and 16 per pixel. Next in step 308, values of 16 are clipped to 15 so that the alpha value for each pixel can be represented using 4 bits. This permits the alpha values to range between 0-15 and allows the alpha values to be stored using 4 bits each as opposed to 5 bits which would be needed for the range 0-16. The alpha values produced by clipping step 308, on per pixel, are stored in the font glyph cache 310 as a glyph corresponding to the sampled image. Multiple character glyphs may be stored in the font glyph cache 310.

The glyph display phase of display text begins with glyphs being output by the glyph cache 310. The output of glyphs is in response to a glyph identifier which identifies the stored glyph to be output.

The alpha values, one per pixel, included in the output glyphs are processed to apply selected foreground and background colors in blending step 312. As part of step 312, the alpha values are normalized to a value between 0 and 1. Foreground and background colors are then applied, to generate R, G, and B luminous intensity values, on a per pixel according to the following equation:

$$R = \alpha R_F + (l-\alpha) R_B$$

$$G = \alpha G_F + (l-\alpha) G_B$$

$$B = \alpha B_F + (l-\alpha) B_B$$

Note that foreground and background colors are specified as gamma corrected values, i.e., values which have been processed to take into consideration the nonlinear response characteristics of a display device. Before use in the color blending operation 312, the gamma corrected foreground and background colors are inverse gamma corrected in steps 311 and 312 to produce the foreground and background luminous intensity values used in the color blending process.

The R, G, B foreground and background luminous intensity values used for blending are indicated through the use of an F subscript for a foreground value and a B subscript for a background value.

The generated luminous intensity values are gamma corrected in step 314 prior to being stored in the display buffer 316. Gamma correction is a well known process for adjusting luminous intensity values to take into consideration the nonlinear nature of the light output of a display device in response to voltage control signals.

Figure 4 illustrates another embodiment of the known process for rendering and displaying opaque glyphs. In the Figure 4 process 400, a pre-computed look-up table 402 is used to perform a combined color application and gamma correction procedure. A different look-up table 402 is used for each supported set of foreground/background colors. The look-up table 402 receives as its input one four bit alpha value per pixel and outputs one set of R, G, B values for each alpha value supplied thereto.

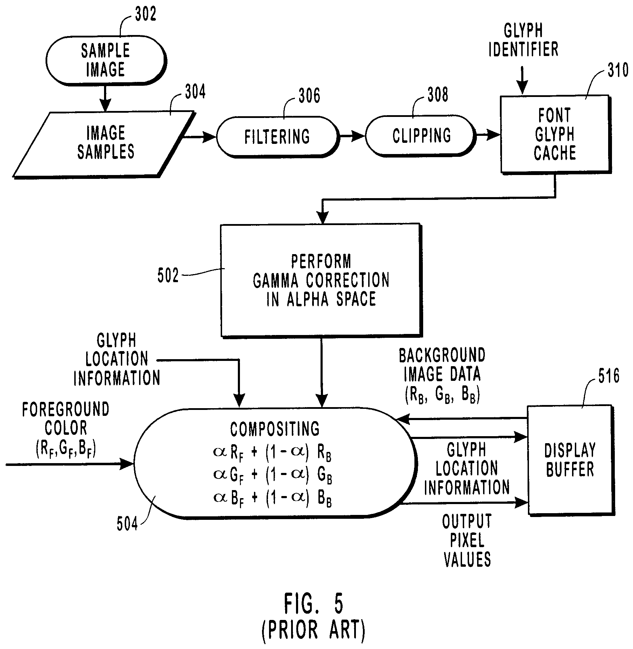

Figure 5 illustrates a known process 500 for rendering and displaying transparent glyphs. In the Figure 5 embodiment, gamma correction is performed in the alpha color space in step 502 on the alpha values output by the font glyph cache 310. The gamma corrected alpha values are then supplied to compositing step 504. Since gamma correction is performed in alpha space inverse gamma correction operations need not be performed on the foreground/background color values prior to color blending. Compositing step 504 is responsible for performing color blending using a fixed foreground color and a background color obtained from a background image. Accordingly, in the process 500, background image data is retrieved, on a per pixel basis, from the display buffer 516 in compositing step 504 for color blending purposes. The background information is retrieved from the pixel location in the display buffer 516 corresponding to the image location of the pixel being prepared for display. The R, G, B luminance values produced for each pixel are stored in the display buffer 516 at locations indicated by the glyph location information supplied to compositing step 504.

While the known text display methods work satisfactorily in many applications, as discussed above, in the case of LCD displays and small display sizes, images can suffer from blur, jaggedness, and other problems due to a lack of resolution. This is due, in part, to the fact that pixels are treated as single entities in most known image display processes. In view of the above remarks, it is apparent that there is a need for new and improved display methods and apparatus. It is desirable that at least some of the new methods and apparatus be capable of displaying small size text on LCDs at reasonable quality levels. It is also desirable that some of the new methods and apparatus be capable of displaying text in a computationally efficient manner allowing for the use of lower cost processors than might otherwise be required.

EP 0 786 757 A relates to a method and apparatus for processing a character for anti-aliased display on a raster output device. A graphics description for the character is rendered into a high resolution rendering having a higher resolution than is supported by the output device. From the high resolution rendering, a density map is created at the output device resolution. Each density element of the density map is computed from a plurality of elements in the high resolution rendering. Each density element of the density map corresponds to a pixel position on the output device, and the value of a density element is used to determine the tone at the corresponding output pixel. An adjusted density map is created from the density map by adjusting the density map values to compensate for any fading expected to occur. An output pixel map is computed from the adjusted density map by assigning a corresponding output pixel value to each density element.

## SUMMARY OF THE INVENTION

It is the object of the present invention to enhance the display quality of characters.

This object is solved by the subject matter of the independent claims.

Preferred embodiments are defined by the dependent claims.

The present invention relates to methods and apparatus for displaying images, e.g., text characters, on display devices which have multiple separately controllable luminance elements per pixel.

In accordance with the present invention, pixel sub-components are treated as individual luminous intensity sources which can be separately controlled to represent different portions of a source image. As part of the display process of the present invention, high resolution representations of images, e.g., outline representations of text characters to be displayed, are super-sampled. Sets of samples corresponding to different but potentially overlapping image portions are then used to control the light output of individual pixel sub-components of each pixel. The samples, in the set of samples used to control each pixel sub-component are filtered, e.g., summed, to generate a filtered alpha value corresponding to a pixel sub-component. In this manner, a set of filtered alpha values, one for each pixel sub-component of a pixel is generated.

Foreground and background color is applied to each pixel sub-component through the use of alpha blending techniques.

Methods and apparatus for efficiently darkening characters which may otherwise appear too light or gray, due to thin stem widths, are described herein. The described methods involve bloating character images of particular fonts with which the gray problem due to thin stems is associated. The bloating operation may be selectively implemented as part of a filtering look-up table operation. Such an approach to resolving the gray character problem avoids the need to modify hinting rules or modify the character font file from which the character images are generated.

Additional features, embodiments and benefits of the methods and apparatus of the present invention are discussed in the detailed description which follows.

## BRIEF DESCRIPTION OF THE DRAWINGS

Figure 1 illustrates a known portable computer including a striped LCD display.
Figure 2 illustrates a known image sampling method.
Figure 3 illustrates a known process for rendering and displaying opaque glyphs.
Figure 4 illustrates a known process for rendering and displaying opaque glyphs which involves the use of a look-up table to perform both a color application and a gamma correction operation.
Figure 5 illustrates a known process for rendering and displaying transparent glyphs.
Figure 6 illustrates a method of sampling and filtering images in accordance with an exemplary embodiment of the present invention.
Figure 7 illustrates sampling and filtering features of the present invention as applied to a text character string comprising three character images.
Figure 8 illustrates the sampling and filtering of a portion of a text character illustrated in Figure 7, in accordance with an exemplary embodiment of the present invention.
Figure 9 illustrates utilized intermediate alpha value annotation and how intermediate alpha values relate to the filter output values produced from intermediate alpha values.
Figure 10 illustrates an image filtering look-up table which can be used to perform a filtering operation in accordance with the present invention.
Figure 11 illustrates a computer system of the present invention which implements the display methods and apparatus of the present invention.
Figure 12 illustrates various components of the computer system of Figure 11 in greater detail.
Figure 13 illustrates an image bloating rule table of the present invention.
Figures 14-16 illustrate the effect of the image bloating rules included in the table of Figure 13 on various sets of input data.
Figure 17 illustrates how the application of the image bloating rules of the present invention and the image filtering operations of the present invention can be implemented through the use of successive look-up tables.
Figure 18 illustrates how the application of image bloating rules and image filtering can be performed using a single look-up table.

## DETAILED DESCRIPTION OF THE INVENTION

As discussed above, the present invention is directed to methods and apparatus for displaying images, e.g., text, on display devices which have multiple controllable luminance elements, e.g., pixel sub-components, per pixel.

The present invention treats pixel sub-components as independent luminous intensity sources which may be used to represent an image. In accordance with the present invention, different portions of a source image, e.g., a high resolution representation of a text character, are used to control different pixel sub-components of a pixel. In this manner, improved resolution is achieved when displaying images with separately controllable pixel sub-components. While using different portions of a source image to control each pixel sub-component of a pixel may introduce some color errors since humans are considerably more sensitive to light intensity than color, the trade off between increased resolution at the expense of decreased color accuracy can provide significant display benefits. The benefits are particularly noticeable when displaying text at small sizes which is frequently the case in hand-held devices and portable computer applications.

## I. Exemplary Sampling and Filtering Methods

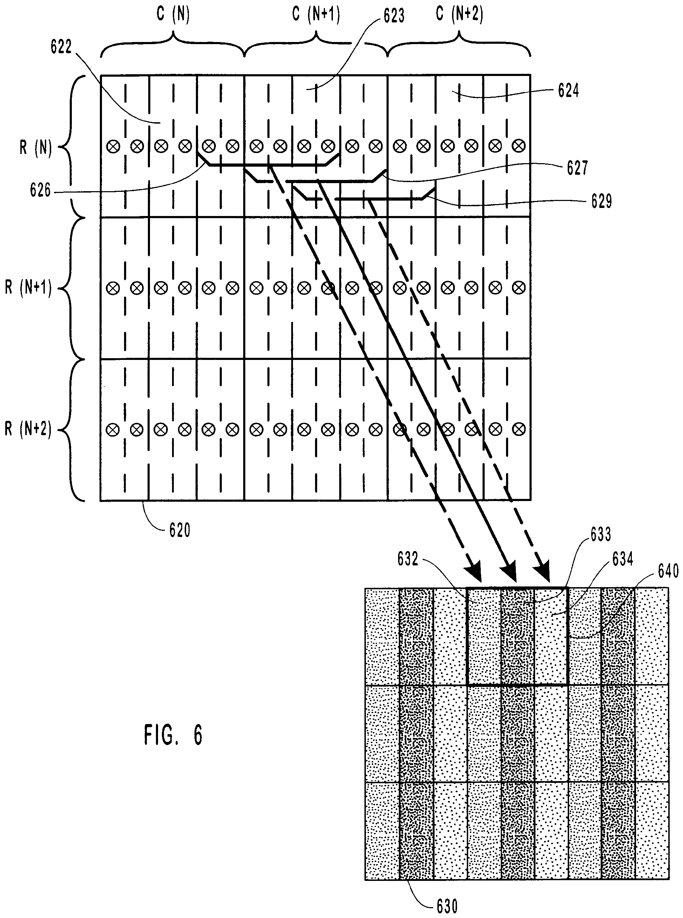

Figure 6 illustrates an exemplary image sampling and filtering method, used in accordance with one embodiment of the present invention. The sampling and filtering process illustrated in Figure 6 is suitable for use with RGB striped displays, such as the vertically striped display represented by grid 630. In grid 630 dark solid lines are used to represent pixel boundaries while lighter solid lines are used to represent pixel sub-component boundaries. Red, green and blue pixel sub-components 632, 633, 636 of pixel 640 are illustrated in Figure 6 using medium, dark and light speckling, respectively.

In Figure 6, the grid 620 represents a source image, e.g., a scaled, hinted, foreground/background color representation of a text character. The source image 620 has been divided into 9 segments source image pixel segments corresponding to 3 rows R(N), R(N+1), R(N+2) and 3 columns C(N), C(N+1), C(N+2). The three segments in row (N) are identified by reference numerals 622, 623, 624. Each one of the 9 source image pixel segments is a source image portion which is proportional in size to one display pixel, e.g., pixel 640, of the display screen represented by grid 630. For purposes of illustration, each source image area is divided into three regions separated by long dashed lines used to represent the location of pixel sub-component boundaries in each source image pixel segment. Smaller dashed lines are used to divide each source image pixel sub-component segment into two sections for purposes of source image sampling.

In accordance with the present invention, each one of the source image segments 622, 623, 624 is over-sampled in the direction perpendicular to the RGB striping. In the Figure 6 embodiment, the source image is over-sampled at a rate of 6x in the direction perpendicular to the striping, e.g., the horizontal direction, and at a rate of 1x in the direction parallel to the striping, e.g., the vertical direction. Thus, as illustrated in Figure 6, 6 samples are generated per source image pixel area. Other sampling rates are also possible, e.g., sampling at 3n times in the horizontal direction and 1 times in the vertical direction could be used, where n is n is an integer, e.g., 2.

Unlike the known image sampling and filtering process illustrated in Figure 4, which uses the same set of samples to control each of the pixel sub-components of a pixel, the present invention uses different source image portions and thus sets of source image samples, to control each pixel sub-component of the display screen 630. For example, in the Figure 6 embodiment, six samples centered horizontally about the location of each pixel sub-component to be controlled, are used to generate each pixel sub-component luminous intensity value. Since the centers of each of the red, green and blue pixel sub-components 632, 633, 634 are displaced from one another, the sets of samples used to control these pixel sub-components are also displaced from one another. Accordingly, the sampling and filtering techniques of the present invention used to generate pixel sub-component luminous intensity values may be described as displaced sampling with filtering.

In Figure 6, the brackets 626, 627, 629 and arrows extending therefrom represent the filtering of image samples to produce a value used to control the pixel sub-component to which the arrow leads. For example, in the Figure 6 illustration, bracket 626, and the arrow leading therefrom, is used to indicate the filtering of the 6 samples used to control the red pixel sub-component 632. Bracket 627 and the arrow leading therefrom is used to indicate the filtering of the 6 samples used to control the green pixel sub-component 632. In addition, bracket 629, and the arrow leading therefrom, is used to indicate the filtering of the 6 samples used to control the blue pixel sub-component 632. In accordance with the present invention, the filtering may be a simple box filtering operation implemented, e.g., by summing the value of the six samples being filtered.

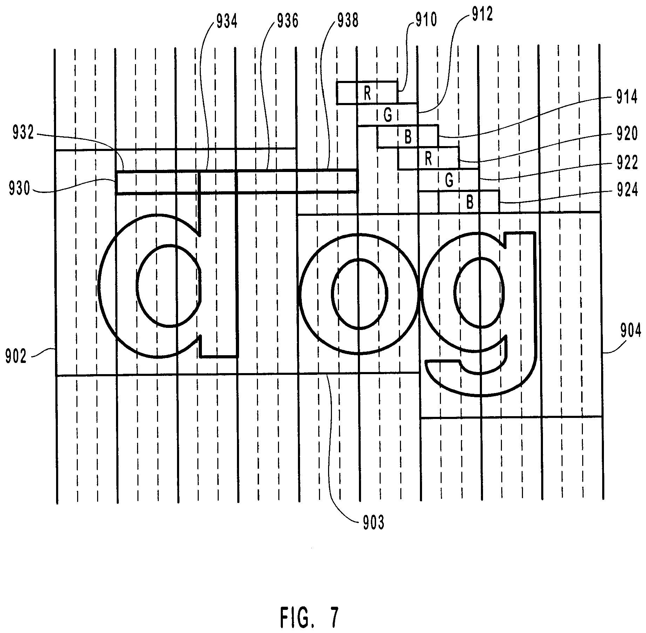

Figures 7-10 further illustrate an exemplary oversampling and filtering operation that is presented in preparation for later describing the methods of the invention in which the foreground portions of character glyphs that tend to exhibit graying or a font contrast problem are slightly widened or "bloated".

Consider the case of combining character glyphs corresponding to the letters d, o, g to form the word "dog" as illustrated in Figure 7. In Figure 7, box 902, represents the character glyph for the letter "d", box 903 represents the character glyph for the letter "o", and box 904 represents the character glyph for the letter "g". While the characters are shown in Figure 7, each character glyph would, in actuality, be represented by a set of alpha values. Solid lines indicate pixel boundaries while dashed lines are used in Figure 7 to indicate sub-pixel boundaries. Boxes 910, 912, 914 illustrate the horizontal location of the box filters used in accordance with the present invention to filter the alpha values used to generate the R, G, and B pixel sub-component luminous intensity values of a first pixel located along the left side of the vertical o-g glyph boundary. Box filters 910, 912, 914 are illustrated as being vertically displaced for purposes of illustration. In the exemplary embodiment, displacement of the box filters 910 through 924, which are used for horizontally adjacent image areas, occurs in the horizontal but not the vertical image direction. Box filters 920, 922, 924 are used for filtering a pixel located on the right side of a vertical o-g glyph boundary plane.

Note how the output of the red box filter 910 depends on the alpha values from the source image segment adjacent, and to the left of, the pixel image segment to which the red pixel sub-component corresponds. Also note how the output of the blue box filter 914 depends on the alpha values from the source image pixel segment to the right of the pixel image segment to which the blue pixel sub-component corresponds. In the case where character images are not separated horizontally by at least one pixel sub-component of background color space (equivalent to 2 samples in the case of over-sampling by 6), bleeding of the color from the neighboring character glyph into the adjacent character glyph will occur for pixels along the glyph boundary where the character images touch.

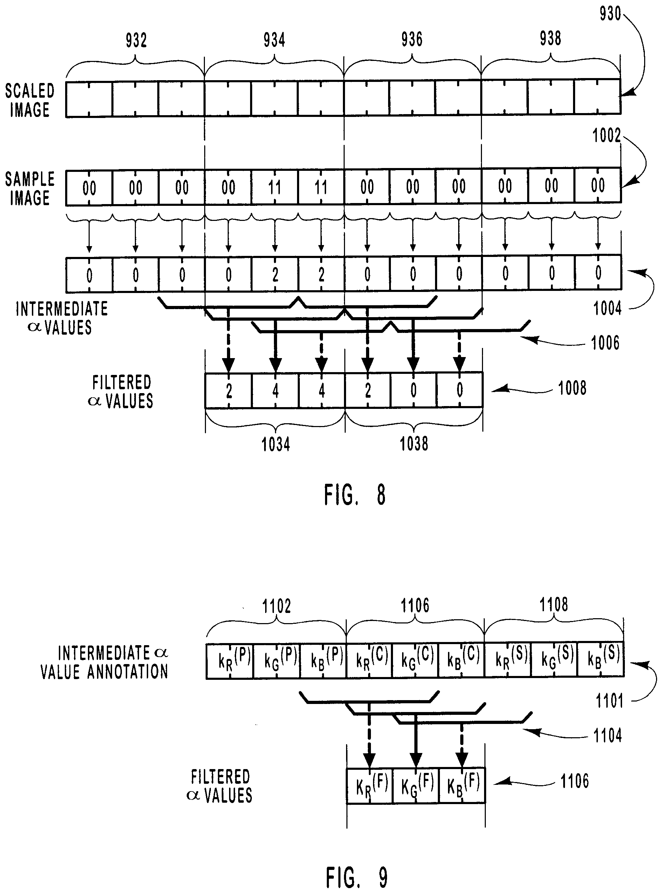

The effect of adjacent source image portions located across pixel boundaries, in the case of over-sampling by 6 and the use of box filters 6 samples wide, is apparent in the example shown in Figure 8. Figure 8 illustrates the application of sampling and filtering in accordance with the present invention, as applied to image segment 930 which includes four adjacent source image pixel segments 932, 934, 936, 938.

In accordance with the present invention, source image segments 932, 934, 936, 938 are each over-sampled by a factor of 6 to produce a set of 6 samples per source image pixel segment. Row 1002 of Figure 8, illustrates, directly below each source image segment, the values of the samples obtained from the corresponding source image segments. For example, sample values (0,0,0,0,0,0) are obtained by sampling source image segments 932, 936 and 938 while sample values (0,0,1,1,1,1) are obtained by sampling source image segment 934.

In many embodiments, pairs of individual samples are summed to form a set of intermediate alpha values, 3 per source image pixel segment area. The summing of pairs of alpha values is done for purposes of computational and storage efficiency. It also permits the intermediate alpha values to be generated in a font driver while filtered alpha values are generated by the graphics display interface 801. The separation of the generation of the intermediate alpha values and filtered alpha values allows a font driver to be generated without concern or knowledge of how the GDI 801 generates filtered alpha values.

The intermediate alpha values corresponding to each source image pixel segment is shown in Figure 8 in row 1004 directly below the corresponding source image pixel segment area. As illustrated intermediate alpha values (0,0,0) are generated from source image pixel segment areas 932, 936 and 938 while intermediate alpha values (0, 2, 2) are generated from source image pixel segment 934.

In accordance with the present invention, box filtering is applied to the intermediate alpha values as represented by the brackets generally indicated by reference numeral 1006. The box filtering produces filtered alpha values at a rate of one filtered alpha value per pixel sub-component which, in the exemplary embodiment, is three alpha values per pixel, i.e., one for each of the R, G, and B pixel sub-components of a pixel.

The alpha values for the R, G and B pixel sub-components of two adjacent pixels 1034, 1036 are shown in row 1008. In row 1008, it can be seen that the R, G, B (filtered) alpha values for pixel 1034 are 2, 4, 4, respectively. In addition, it can be seen that the R, G, B alpha values for pixel 1038 are 2, 0, 0, respectively.

Figure 9 illustrates in row 1101, intermediate alpha values corresponding to three source image pixel segments 1102, 1106, 1108. As discussed above, the three intermediate alpha values include a R, a G, and a B pixel sub-component intermediate alpha value, for each source image pixel segment.

Figure 9 also illustrates, through the use of brackets generally indicated by the reference numeral 1104, block filtering performed to generate each of three filtered alpha values illustrated in row 1106. The three filtered alpha values include a R, a G and a B filtered alpha value corresponding to the red, green and blue pixel sub-components, respectively, of a current pixel.

Because of the implemented filtering, the filtered alpha values generated for each pixel depend on the intermediate alpha values corresponding to a current source image pixel segment, one intermediate alpha value from a preceding source image pixel segment and one intermediate alpha value from a subsequent source image pixel segment.

In Figure 9, the small letter k is used to represent intermediate alpha values, while the large letter K is used to represent a filtered unnormalized alpha value. Subscripts R, G, and B are used to indicate the pixel sub-component to which the illustrated intermediate or filtered alpha value corresponds. The superscript (P) is used to indicate a value corresponding to a preceding source image pixel segment, the superscript (C) is used to indicate a value corresponding to a current source image pixel segment and the superscript (S) is used to indicate a value corresponding to a subsequent source image pixel segment. In addition, the superscript (F) is used to further indicate a filtered alpha value produced by the filtering operation of the present invention.

The filtering performed in accordance with the present invention may be expressed as follows:

$$K_R^{(F)} = K_B^{(P)} + K_R^{(C)} + K_G^{(C)}$$

$$K_G^{(F)} = K_R^{(C)} + K_G^{(C)} + K_B^{(C)}$$

$$K_B^{(F)} = K_G^{(C)} + K_B^{(C)} + K_R^{(S)}$$

Thus, in accordance with the present invention, the set of three filtered alpha values per pixel is generated from a set of 5 intermediate alpha values.

Given that there are a limited number (35) of possible input alpha value combinations, it is possible to pre-compute the set of filtered output values that will result from each set of possible intermediate alpha value coefficients. In one embodiment, the computations are made and the resulting filtered output values are stored in a look-up table which is used to implement the filtering operation of the present invention. Thus, the filtering computations need not be performed repeatedly in real time for each image being displayed.

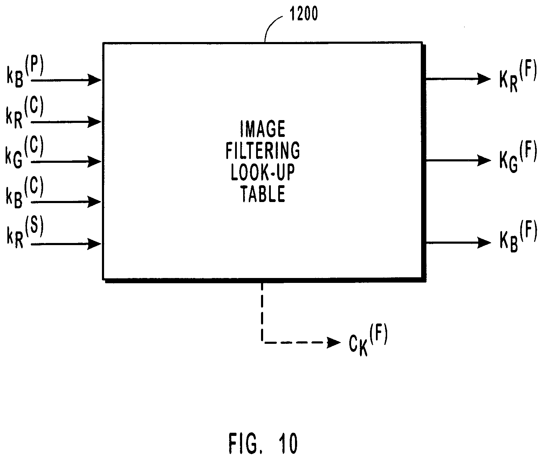

An image filtering look-up table 1200, implemented in accordance with the present invention, is illustrated in Figure 10. The look-up table 1200 receives as its input the five intermediate alpha values ($K_R^{(C)}$, $K_G^{(C)}$, $K_B^{(C)}$, $K_R^{(S)}$) required to generate a set of R, G, and B filtered alpha values. The five input values are used as an index into the look-up table 1200 to locate a corresponding set of filtered alpha values ($K_R^{(F)}$, $K_G^{(F)}$, $K_B^{(F)}$) which are then output by the look-up table 1200.

Because the filtering operations used to generate the R, G and B filtered alpha values are not completely independent, only 115 different output combinations of filtered alpha values may occur. Accordingly, it is possible to represent a set of three filtered alpha values associated with a pixel as a single value in the range of 0-114. By using a value in the range of 0-114 to represent 3 filtered alpha values lossless data compression is achieved. Significantly, the values 0-114 can be represented using only 8 bits as opposed to 9 bits that would be needed to individually represent three district filtered alpha values each capable of assuming a value in the range 0-6. In embodiments which cache filtered alpha values, as will be discussed below, the 3 filtered alpha values for each pixel are represented in a compressed format as a number in the range of 0-114. Filtered alpha value compression and decompression can be implemented through the use of a look-up table. In fact, in embodiments where data compression is used, the image filtering look-up table may output a single value CK(F) representing, in compressed form, the 3 filtered alpha values $K_R^{(F)}$, $K_G^{(F)}$ $K_B^{(F)}$. The line exiting look-up table 1200 and terminating in the symbol CK$^{(F)}$ is shown using a dotted line to indicate that it is an alternative to the look-up table 1200 separately outputting 3 filtered alpha values.

## II. Exemplary Computing and Software Environment

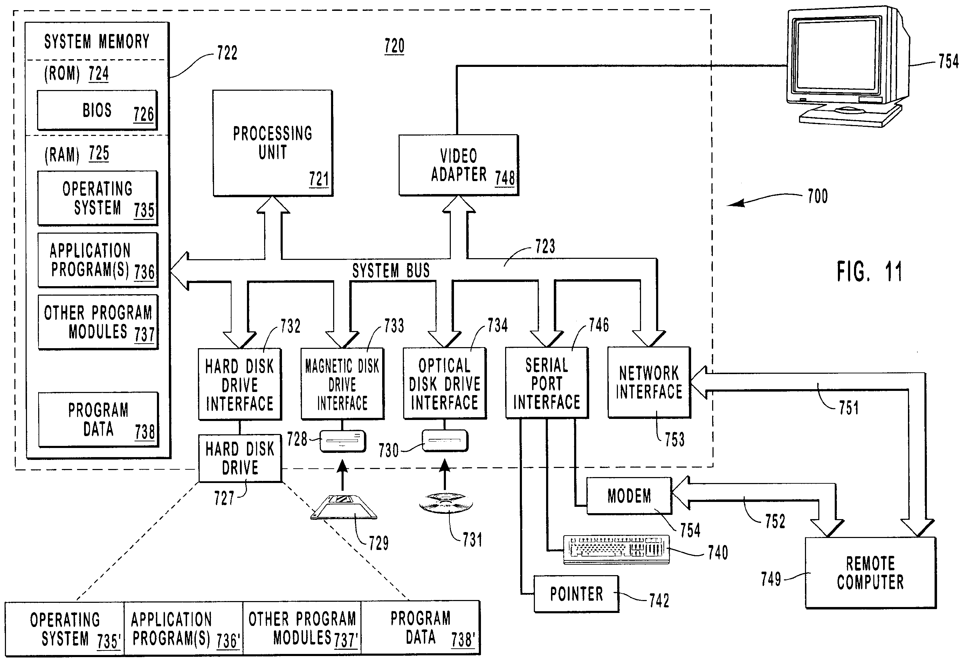

Figure 11 and the following discussion provide a brief, general description of an exemplary apparatus in which at least some aspects of the present invention, including the sampling and filtering illustrated in Figure 6, may be implemented. Various methods of the present invention will be described in the general context of computer-executable instructions, e.g., program modules, being executed by a computer device such as a personal computer. Other aspects of the invention will be described in terms of physical hardware such as, e.g., display device components, image rendering hardware, and display screens.

The methods of the present invention may be affected by other apparatus than the specific described computer devices. Program modules may include routines, programs, objects, components, data structures, etc. that perform task(s) or implement particular abstract data types. Moreover, those skilled in the art will appreciate that at least some aspects of the present invention may be practiced with other configurations, including hand-held devices, multiprocessor systems, microprocessor-based or programmable consumer electronics, network computers, minicomputers, set top boxes, mainframe computers, displays used in, e.g., automotive, aeronautical, industrial applications, and the like. At least some aspects of the present invention may also be practiced in distributed computing environments where tasks are performed by remote processing devices linked through a communications network. In a distributed computing environment, program modules, routines and data, e.g., character font file, may be located in local and/or remote memory storage devices.

Figure 11 illustrates an exemplary apparatus 700 for implementing at least some aspects of the present invention. The apparatus 700 includes a general purpose computing device, e.g., a portable personal computer 720. The personal computer 720 may include a processing unit 721, a system memory 722, and a system bus 723 that couples various system components including the system memory to the processing unit 721. The system bus 723 may be any of several types of bus structures including a memory bus or memory controller, a peripheral bus, and a 30 local bus using any of a variety of bus architectures. The system memory 722 may include read only memory (RON) 724 and/or random access memory (RAM) 725. A basic input/output system 726 (BIOS), including basic routines that help to transfer information between elements within the personal computer 720, such as during start-up, may be stored in RON 724. The personal computer 700 may also include a hard disk drive 727 for reading from and writing to a hard disk, (not shown), a magnetic disk drive 728 for reading from or writing to a (e.g., removable) magnetic disk 729, and an optical disk drive 730 for reading from or writing to a removable (magneto) optical disk 731 such as a compact disk or other (magneto) optical media. The hard disk drive 727, magnetic disk drive 728, and (magneto) optical disk drive 730 may be coupled with the system bus 723 by a hard disk drive interface 732, a magnetic disk drive interface 733, and a (magneto) optical drive interface 734, respectively. The drives and their associated storage media provide nonvolatile storage of machine readable instructions, data structures, program modules and other data for the personal computer 720. Although the exemplary environment described herein employs a hard disk, a removable magnetic disk 729 and a removable optical disk 731, those skilled in the art will appreciate that other types of storage media, such as magnetic cassettes, flash memory cards, digital video disks, Bernoulli cartridges, random access memories (RAMs), read only memories (RON), and the like, may be used instead of, or in addition to, the storage devices introduced above.

A number of program modules may be stored on the hard disk 727, magnetic disk 728, (magneto) optical disk 731, ROM 724 or RAM 725, such as an operating system 735, one or more application programs 736, other program modules 737, and/or program data 738 for example. As will be discussed below, the operating system 735 may include character font files which include high resolution representations of characters and one or more gnat tables which include character stem width control information. A user may enter commands and information into the personal computer 720 through input devices, such as a keyboard 740 and pointing device 742 for example.

Additional input devices (not shown) such as a microphone, joystick, game pad, satellite dish, scanner, or the like may also be included. These and other input devices are often connected to the processing unit 721 through a serial port interface 746 coupled to the system bus. However, input devices may be connected by other interfaces, such as a parallel port, a game port or a universal serial bus (USB). Liquid crystal display device 754 or another type of display device, e.g., a CRT display, may also be connected to the system bus 723 via an interface, such as a video adapter 748 for example.

In addition to the display 754, the personal computer 720 may include other peripheral output devices (not shown), such as speakers and printers for example.

The personal computer 720 may operate in a networked environment which defines logical connections to one or more remote computers, such as a remote computer 749. The remote computer 749 may be another personal computer, a server, a router, a network PC, a peer device or other common network node, and may include many or all of the elements described above relative to the personal computer 720, although only a memory storage device 750 has been illustrated in Figure 11. The logical connections depicted in Figure 11 include a local area network (LAN) 751 and a wide area network (WAN) 752, an intranet and the Internet.

When used in a LAN, the personal computer 720 may be connected to the LAN 751 through a network interface adapter (or "N1C") 753. When used in a WAN, such as the Internet, the personal computer 720 may include a modem 754 or other means for establishing communications over the wide area network 752. The modem 754, which may be internal or external, may be connected to the system bus 723 via the serial port interface 746. In a networked environment, at least some of the program modules depicted relative to the personal computer 720 may be stored in a remote memory storage device. The network connections shown are exemplary and other means of establishing a communications link between the computers may be used.

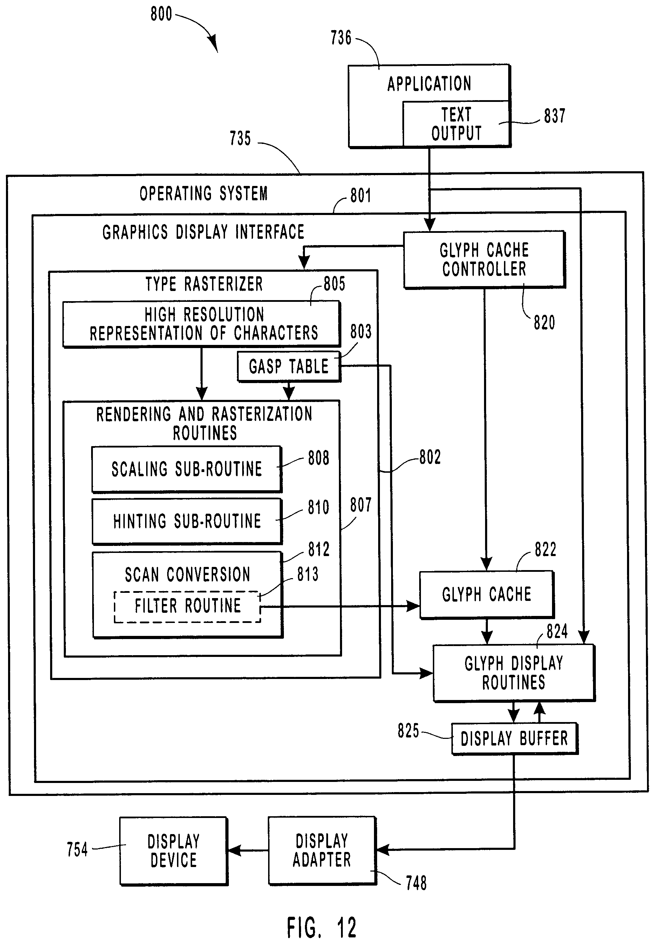

Figure 12 illustrates the relationship between various hardware and software components 800 including application program 736, operating system 735, video adapter 748 and display device 754, of the system 700.

In the illustrated embodiment, operating system 735 includes a graphics display interface (GDI) 801. The GDI 801 includes a glyph cache controller 820, type rasterizer 802, glyph cache 822, glyph display routines 824, and display buffer 825. The arrows leading to and from the display buffer 825 and glyph display routines 824 indicate that data can be written to and read from the display buffer 825.

The text output of application 837 includes information identifying the content of a text string, e.g., the sequence of characters included therein, in addition to character font and point size information. The text output information 837, generated by application 736, may also include character positioning information, e.g., angling or spacing information, and/or foreground/background color information. The character positioning information and/or foreground/background color information is supplied to the glyph display routines 824.

The glyph cache controller 820 is responsible for managing the content and output of the glyph cache 822. The glyph cache controller 820 receives the text output information 837 including the character, font and point size information. The controller 820 determines if a character to be displayed is already stored in the glyph cache 822.

If a character glyph corresponding to a character to displayed at a specified point size is already stored in the glyph cache 822, the glyph cache controller 820 controls the glyph cache 822 to output the corresponding character glyph. The character glyph is supplied to the glyph display routines 824, which are responsible for combining individual glyphs into a larger image for display purposes and applying foreground/background color selections.

However, if a character glyph corresponding to a character to be displayed at a specified point size is not already stored in the glyph cache 822, the glyph cache controller 820 provides the character, font and point size information to the type rasterizer 802.

The type rasterizer 802 is responsible for generating a character glyph from the received information.

The type rasterizer 802 includes a set of high resolution digital representations of characters 805; a GASP table 803, including character stem width control information; and a set of rendering and rasterization routines 807. The digital representation of characters 805 may include font files which include scalable outline representations of characters and character spacing information. The character outlines may be expressed in the form of lines, points, curves and/or arcs. Portions of a character within a character outline represent foreground image areas while portions outside the character outlines, e.g., the area between characters, represent background image areas.

The GASP table 803 includes information which indicates the display point size at which stem weights for a stored font should transition from one to two pixels in width. As will be discussed below, this table, in some embodiments, is used to determine which characters should have their stem widths increased, e.g., bloated, under certain conditions discussed below.

The set of rendering and rasterization routines 807 includes scaling, hinting and scan conversion subroutines 808, 810, 812 as well as a color compensation sub-routine 870.

Scaling sub-routine 808 is responsible for scaling the outline representations of the characters to be rendered. This is done, in accordance with the present invention, as a function of pixel pattern and/or direction of display striping. For example, in the exemplary embodiment, the outline representations of the characters to be rendered are scaled at a rate perpendicular to the direction of striping at a rate which is an integer multiple of the rate of scaling in the direction of striping.

Hinting sub-routine 810 is responsible for adjusting the shape and/or position of character outlines. Hinting is performed as a function of display device characteristics and takes into consideration the position, shape, type and/or arrangement of pixel sub-components which comprise the display 754.

Scan conversion sub-routine 812 is responsible for generating a bitmap representation, e.g., a character glyph, from the hinted outline representation produced by the hinting sub-routine 312. The scan conversion operation involves sampling the hinted outline image representation and then, optionally, filtering the sampled image values prior to storage in the glyph cache. An optional filter routine 813 is illustrated using dashed lines as part of the scaling routine 812. As will be discussed below, filtering 813 may be performed as part of the glyph display routines 824 when it is not performed prior to generated glyphs being placed in the glyph cache 822. In accordance with the present invention, character glyphs may be represented as sets of sampled alpha values or, alternatively, filtered alpha values corresponding to red, green and blue pixel sub-components of individual pixels. In addition to the alpha value information generated character glyphs may include character spacing information such as one or more side bearing points. In cases where filtering is applied prior to glyph caching, the three filtered alpha values per pixel may be stored in a compressed format.

The character glyphs generated by the type rasterizer 805 are stored in the glyph cache 822 prior to being output under the direction of the glyph cache controller 820. In this manner, the glyph cache serves as a repository for character glyphs.

The glyph display routines 824 are responsible for processing character glyphs output by the glyph cache 822. The routines 824 combine the received glyphs into larger images, e.g., images of text strings, and apply foreground/background color selections. The glyph display routines 824 may also filter all or parts of the larger image generated from the character glyphs, e.g., prior to the application of foreground/background color selections.

The glyph display routines 824 include different routines for processing opaque and transparent glyphs. In the case of opaque glyphs, foreground and background color selections are applied uniformly to the entire image being generated, i.e., set foreground and background colors are applied. In the case of transparent glyphs, a uniform foreground color is applied and a background image, e.g., a previously displayed image, is used to provide the background color.

In the case of transparent glyphs, background color information is normally obtained from the display buffer 825.

Through the application of foreground/background color selections, gamma correction processes and various filtering operations, the glyph display routines 824 generate R, G, B pixel sub-component luminous intensity values which represent the characters to be displayed. The generated R, G, B luminous intensity values are stored in the display buffer 825, in memory locations corresponding to the pixel sub-components of the display device 754, which are to be controlled by the stored values.

Periodically, the values stored in the display buffer 825 are supplied to the display adapter 748. The display adapter 748 processes the received luminous intensity values and converts them into a signal format which is supported by the display device 754. In response to receiving signals from the display adapter 748, the display device 754 displays the text characters corresponding to text output 837.

### III. Bloating Low Contrast Character Stems

When the above described filtering and display techniques are applied to certain fonts having narrow character stems, such as, e.g., Courier New, the resulting displayed characters can appear gray, assuming black text on a white background and can appear without significant contrast. This is understandable given the filtering applied during the display process. Given the above described filtering process, if a character is very thin, e.g., 1/6 of a pixel wide at a particular scan line, then only one sample of the six times over-sampled scan-line will be "on", e.g., correspond to the foreground color. This sample, after the filtering, will produce alpha values that are no more than 1 (on a scale from 0-6). If the background is white and the foreground is black, the pixel representing the character will not be more than 1/6 gray. This can be hard to read. Accordingly, in the case of thin stemmed fonts, the improved resolution associated with treating pixel sub-components as independent luminous sources may make the characters thinner than is desirable.

One way to address this problem would be to re-design the gray fonts such as Courier New, to be thicker than they presently are. However, re-designing fonts requires a significant investment in font designer time which can be extremely expensive. Another disadvantage of changing the font sets is that while broadening the font stems may improve appearance on LCD displays, it may result in overly thick character stems on CRT displays where, depending on the character display implementation, pixel sub-components may not be treated as independent luminous intensity sources.

One feature of the present invention is directed to addressing the contrast problem associated with thin stemmed fonts which look pale gray when displayed on the screen without the need to re-design the fonts.

In order to enhance the contrast of fonts which tend to gray, it is desirable to slightly widen or "bloat" the foreground portions of character glyphs that are associated with the gray or font contrast problem mentioned above. Since the gray character font problem associated with thin-stemmed character fonts, such as Courier New, does not occur in the majority of fonts, it is desirable that the bloating of characters in accordance with the present invention be applied selectively.

In one embodiment, information in the GASP table 803, which indicates the point size at which character stem widths will increase from one pixel to two pixels in width, is used to determine which fonts should be subject to bloating in accordance with the present invention and which should be rendered without bloating. In one embodiment, the bloating is applied to all characters of a font which is subject to bloating.

Most fonts change stem widths from one to two pixels at point sizes in the range of 12-16 points. In the case of Courier New, a thin stem character font subject to the gray font problem discussed above, stem widths change from one pixel in width to two pixels in width at about a point size of 27 or 28 points. The large distinction in the character stem size transition points provides information which can be used to identify thin stemmed fonts which could benefit from the character bloating technique of the present invention and to distinguish fonts which might be adversely impacted by bloating.

In one particular exemplary embodiment, characters glyphs which correspond to character fonts with stem widths that transition from one to two pixels in size above a pre-selected threshold are subject to bloating while others are not. In one exemplary embodiment, the threshold is set to 20 points. Thus, characters which correspond to fonts which the GASP table 803 indicates are to transition from one to two pixel wide stems above the size of 20 points, e.g., Courier New, are subject to bloating while others are not.

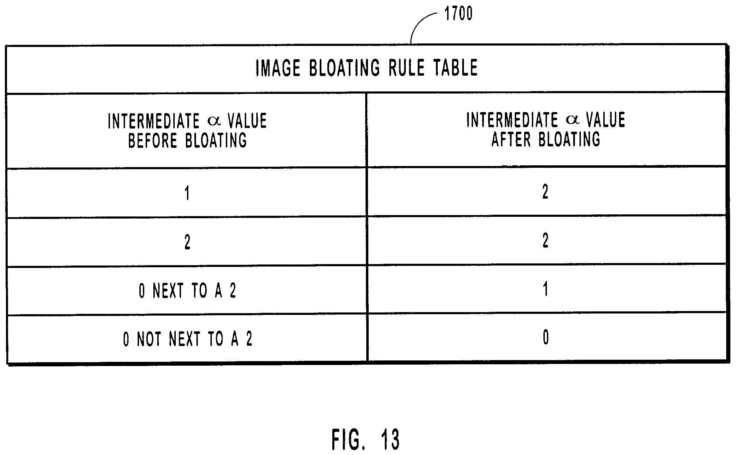

Suitable rules for bloating portions of character glyphs, to which bloating is to be applied, are shown in table 1700 of Figure 13. The illustrated rules are intended to be applied to intermediate alpha values which have been generated by originally over-sampling each source image pixel segment by a factor of 6 and then summing pairs of samples to produce 3 intermediate alpha values per source pixel segment. The left side of table 1700 illustrates input intermediate alpha values and, in some cases a condition associated with an input alpha value. The right side of table 1700 illustrates the intermediate alpha value to be substituted for the intermediate alpha value shown on the left, provided that the condition, if any, associated with the input alpha value is satisfied.

Intermediate alpha values to the exemplary bloating step of the present invention may assume the values of 0, 1, or 2. Based on the rules illustrated in table 1700, intermediate input alpha values to the bloating step of the present invention of 1 and 2 result in an output intermediate alpha value of 2. Intermediate input alpha values of 0 when located next to an intermediate alpha value of 2 result in a output intermediate alpha value of 1. In addition, intermediate input alpha values of 0 when NOT located next to an intermediate alpha value of 2 result in a output intermediate alpha value of 0.

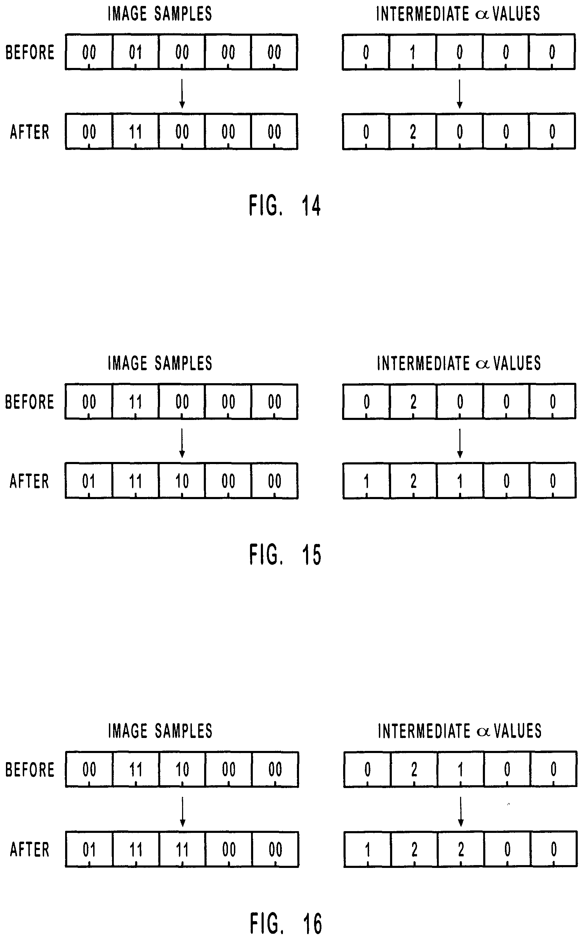

Figures 14-16 illustrate the application of the bloating rules of the present invention to various exemplary input sets of image samples and intermediate alpha values. On the left side of each of Figures 14-16 the application of the bloating rules to an input set of image samples, six per source pixel segment and the resulting processed images samples are shown. On the right side of each of Figures 14-16 the application of the bloating rules to an input set of intermediate alpha values, each alpha value representing the sum of two image samples, is shown. The input alpha values is shown at the top right-hand portion of each of the figures and the intermediate alpha values resulting from the application of the bloating rules is shown on the lower right-hand side of each of Figures 14-16. It can be readily seen in the examples of Figures 14-16 that the bloating technique adds approximately 1/6 of the pixel width to the vertical stem width on each side of the stem or, in other words, it adds a total of 1/3 of the pixel width to the stem width.

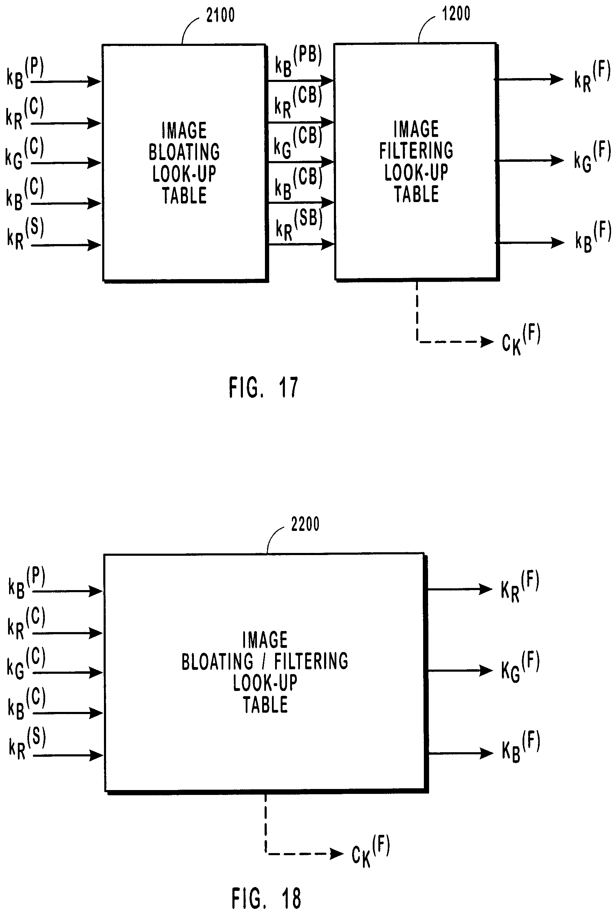

The bloating rules illustrated in table 1700 may be implemented using a look-up table. Figure 17 illustrates an image bloating look-up table 2100 which outputs intermediate alpha values resulting from applying the above bloating rules, through a look-up operation, to input intermediate alpha values. The look-up table 2100 is generated by applying the image bloating rules of table 2100 to each possible set of intermediate alpha values which may be input to the table 2100. The resulting sets of processed intermediate alpha values, one for each possible input set of alpha values, are stored in the table 2100. Thus, there is one corresponding set of processed alpha values stored in the look-up table 2100 for each possible set of input intermediate alpha values. In response to the receipt of an input set of intermediate alpha values, the corresponding stored set of processed alpha values is output by the image bloating look-up table 2100.

The intermediate alpha values generated by the image bloating look-up table 2100 can subsequently be filtered to produce a set of filtered alpha values, e.g., at a rate of 3 per pixel. The filtering operation may be implemented using an image filtering look-up table 1200 which produces filtered alpha values in response to the input of intermediate alpha values. In Figure 17, the letter B included in the superscript of the input intermediate alpha values supplied to filter table 1200 indicates the input alpha values have been processed according to the bloating rules of Figure 13.

For fonts which are not subject to bloating, the image bloating table 2100 may be bypassed and the intermediate alpha values supplied directly to image filtering look-up table 1200.

Rather than use two sequential look-up tables, it is possible to combine the operation of the image bloating look-up table 2100 and the image filtering look-up table 1200 into a single image bloating and filtering look-up table 2200 as illustrated in Figure 18. The image bloating and filtering look-up table 2200 applies performs both image bloating operations and filtering operations as part of a single look-up operation.

In one such embodiment, an image filtering look-up table 1200 is used to filter intermediate alpha values for fonts which are not subject to bloating while an image bloating/filtering look-up table 2200 is used to process intermediate alpha values corresponding to character glyphs subject to bloating.

Because the look-up table 2200 allows bloating and filtering operations to be performed in a single look-up operation, the processing required at display time to perform the bloating operation in addition to the filtering operation requires no more processing than performing the filtering operation alone. Accordingly, use of the combined bloating and filtering table of the present invention 2200 provides an easy and efficient way to adjust the weight of character fonts without having to modify the font or the hinting process associated therewith.

## IV. **Pre- and Post-Cache Glyph Filtering**

The invention can also be practiced in combination with a first filtering embodiment which involves the application of the above described filtering subsequent to the caching of character glyphs or a second filtering embodiment supporting filtering of glyphs prior to the caching of character glyphs.

The first filtering embodiment involves performing the intermediate alpha value filtering discussed above, subsequent to the output of qlyphs from a glyph cache and the combining, e.g., concatenation, of glyphs to form larger images, e.g., text strings. In such post cache filtering embodiments, glyphs are represented in the glyph cache as intermediate alpha value information. In the post cache filtering embodiment color leakage across glyph boundaries does not present a problem at filtering time. This is because, in such embodiments, glyphs are represented using intermediate alpha value information and are concatenated prior to filtering. Thus, by the time filtering is performed, the intermediate alpha values located adjacent glyph boundaries are defined and available for use during the filtering process.

The second filtering embodiment of the present invention supports filtering of glyphs prior to caching. In such embodiments, since glyphs are filtered prior to caching, filtered alpha value information is stored in the glyph cache in compressed or uncompressed form, as opposed to intermediate alpha value information. Notably, the intermediate alpha value filtering of the present invention is color independent since it is performed in the alpha space prior to the application of foreground/background colors. Accordingly, filtering need not be repeated even if the utilized foreground/background colors are changed. This fact, combined with the glyph edge padding and post cache processing techniques of the present invention, discussed below, allow pre-glyph cache glyph filtering to be employed.

Pre-cache glyph filtering has several advantages over post-cache filtering. First, filtering of the entire character glyph is not repeated each time the character glyph is incorporated into a new text string. Thus, processing requirements are reduced as compared to systems which filter entire images formed from cached glyphs each time a new image is generated. Second, when text is rendered at an angle, the entire image which includes the angled text, need not be filtered. Thus, processing can be reduced by eliminating the need to filter non-text background portion of images which include angled text.

Both the pre- and post-cache glyph filtering embodiments are described in more detail in U.S. Patent Application Serial No. 09/364,647, entitled "Method and Apparatus for Filtering and Caching Data Representing Images," and filed July 30, 1999, U.S. Patent Application Serial No. 09/364,647 also discloses filtering in association with the invention for opaque and transparent glyphs.

In view of the description of the invention included herein, numerous additional embodiments and variations on the discussed embodiments of the present invention will be apparent to one of ordinary skill in the art. It is to be understood that such embodiments do not depart from the present invention and are to be considered within the scope of the invention.

## Claims

1. A method of effectively adjusting a dimension of a character feature so as to increase the contrast of the character feature when displayed on a display device (754), in a processing system (700), the display device having a plurality of pixels (640) each having a plurality of pixel sub-components (632, 633, 634) of different colors, the method comprising:

   determining that a character would be displayed with a feature having an unacceptably low contrast in the absence of performing a compensation operation on image data that includes the character and in which characters are represented by a foreground color and a background color;

oversampling the image data and filtering the resulting samples to generate alpha values that are associated with a set of adjacent pixel sub-components and correspond to the feature of the character, wherein each alpha value is generated from a set of the resulting samples and corresponds to a pixel sub-component of a pixel, wherein the generated alpha values comprise a first alpha value and a second alpha value, the first and second alpha values corresponding to different sub-components (632, 633, 634) of a same pixel (640) and being generated from different sets (626, 627, 629) of the resulting samples; and

based on the result of determining, performing the compensation operation, including adjusting at least one of the alpha values to a respective one of said generated alpha values so as to increase the apparent contrast between the foreground color and the background color when the character is displayed on the display device.

2. The method as recited in claim 1, wherein the determining that the character would be displayed with a feature having an unacceptably low contrast comprises identifying a font to which the character belongs or examining the width of a stem of the character.

3. The method as recited in claim 2, wherein the determining that the character would be displayed with a feature having an unacceptably low contrast further comprises determining whether a pixel size at which a stem width of the character transitions from one pixel in width to two pixels in width is greater than a pre-selected pixel size threshold.

4. The method as recited in one of the claims 1 to 3, further comprising:

   displaying the character on the display device by separately controlling the pixel sub-components of the pixels using alpha values that correspond thereto, at least one of the pixel sub-components being controlled using the at least one alpha value that has been adjusted in the compensation operation.

5. The method as recited in one of the claims 1 to 3, further comprising:
   displaying the character on the display device using the alpha values, resulting in each of the pixel sub-components of a particular pixel, rather than entire pixels, representing a different portion of the character.

6. The method as recited in one of the claims 1 to 5, wherein the adjusting of at least one of the alpha values comprises using the at least one alpha value as an index to a lookup table and obtaining an adjusted alpha value from the lookup table.

7. The method as recited in one of the claims 1 to 6, further comprising, after adjusting, caching the alpha values, including the at least one alpha value that has been adjusted, in a font glyph cache for later use in assembling an image to be displayed on the display device.

8. The method as recited in one of the claims 1 to 7, wherein oversampling the image data and filtering the resulting samples comprises:

   oversampling image data in which the character is represented by a foreground color and a background color by obtaining multiple samples of the image data for each of the pixel sub-components of a particular pixel; and
   filtering the multiple samples to obtain alpha values for each of the pixel sub-components of the particular pixel, the value of each of the alpha values corresponding to the number of corresponding multiple samples that are associated with the foreground color; and
   the performing of the compensation operation further comprises:

   adjusting at least one of the alpha values to effectively increase the number of corresponding multiple samples that are associated with the foreground color; and
   using the alpha values, including the at least one adjusted alpha value, to display the character on the display device.

9. The method as recited in claim 8, wherein the character belongs to a Courier New font.

10. The method as recited in claim 8 or 9, wherein the adjusting of at least one of the alpha values comprises:

    determining that some but fewer than all of the multiple samples corresponding to a particular pixel sub-component are associated with the foreground color; and
    based on this determining, adjusting the alpha value of said particular pixel sub-component such that all of the multiple samples corresponding to the particular pixel sub-component become effectively associated with the foreground color.

11. The method as recited in claim 8 or 9, wherein the adjusting of at least one of the alpha values comprises:

determining that none of the multiple samples corresponding to a particular pixel sub-component are associated with the foreground color and that all of the multiple - samples corresponding to a pixel sub-component adjacent to the particular pixel-subcomponent are associated with the foreground color; and

based on this determining, adjusting the alpha value of said particular pixel sub-component such that at least some of the multiple samples corresponding to the particular pixel sub-component become effectively associated with the foreground color.

12. The method of claim 1 wherein the adjusting of at least one of the alpha values comprises:

providing, at a data storage medium at the processing system, a lookup table for converting sets of input alpha values associated with individual pixel sub-components of a pixel to sets of output alpha values used to control the pixel sub-components;

indexing the lookup table using a set of input alpha values that includes input alpha values associated with the pixel sub-components of a particular pixel, the set of input alpha values having been generated by mapping multiple samples of image data that defines a character to each of the pixel sub-component of the particular pixel, the set of input alpha values including:

an input alpha value obtained from at least one sample of the image data corresponding to a red pixel sub-component of the particular pixel;

an input alpha value obtained from at least one sample of the image data corresponding to a green pixel sub-component of the particular pixel;

an input alpha value obtained from at least one sample of the image data corresponding to a blue pixel sub-component of the particular pixel; and

at least one other input alpha value obtained from at least one sample of the image data corresponding to a pixel sub-component of another pixel adjacent to the particular pixel; and

generating, from the lookup table, a set of output alpha values that are associated with the pixel sub-components of the particular pixel, the set of output alpha values effectively increasing the dimension of a character feature of the character.

13. The method as recited in claim 12, wherein the character feature is a stem, the method further comprising:

determining that the stem would otherwise be displayed with an unacceptably low contrast in the absence of generating the set of output alpha values, wherein the indexing of the lookup table is performed based on said determination.

14. The method as recited in claim 12 or 13, wherein the character is defined in the image data by a foreground color and a background color.

15. The method as recited in claim 14, wherein, when the set of input index values includes a particular input alpha value that indicates that some but fewer than all of the multiple samples corresponding to a particular pixel sub-component are associated with the foreground color:

the output alpha value corresponding to the particular input alpha value is selected such that all of the multiple samples corresponding to the particular pixel sub-component become effectively associated with the foreground color.

16. The method as recited in claim 14, wherein, when the set of input index values includes a particular input alpha value that indicates that none of the multiple samples corresponding to a particular pixel sub-component are associated with the foreground color and all of the multiple samples corresponding to a pixel sub-component adjacent to the particular pixel sub-component are associated with the foreground color:

the output alpha value corresponding to the particular input alpha value is selected such that at least some of the multiple samples corresponding to the particular pixel sub-component become effectively associated with the foreground color.

17. The method as recited in one of the claims 12 to 16, wherein the at least one other input alpha value includes:

an input alpha value obtained from at least one sample of the image data corresponding to a blue pixel sub-component in a first pixel adjacent to the particular pixel; and

an input alpha value obtained from at least one sample of the image data corresponding to a red pixel sub-component in a second pixel adjacent to the particular pixel.

18. A computer-readable medium carrying computer-executable instructions for performing the method according to any one of the claims 1 to 17 when run on a computer.

19. A system for displaying an image, comprising: a processing unit (721);
a display device (754) having a plurality of pixels (640), each pixel including a plurality of pixel subcomponents (632, 633, 634) each of a different color; and
a computer program product including a computer-readable medium according to claim 18.

**Patentansprüche**

1. Verfahren zur effektiven Einstellung einer Dimension eines Zeichenmerkmals, um den Kontrast des Zeichenmerkmals zu erhöhen, wenn es auf einer Anzeigevorrichtung (754) angezeigt wird, in einem Verarbeitungssystem (700), wobei die Anzeigevorrichtung eine Vielzahl von Pixeln (640) aufweist, die jeweils eine Vielzahl von Pixel-Teilkomponenten (632, 633, 634) mit verschiedenen Farben aufweisen, wobei das Verfahren umfasst:

Bestimmen, dass ein Zeichen mit einem Merkmal angezeigt werden würde, das einen inakzeptabel niedrigen Kontrast in Abwesenheit der Durchführung eines Kompensationsvorgangs an Bilddaten aufweisen würde, die das Zeichen enthalten, und in welchen Zeichen mit einer Vordergrundfarbe und einer Hintergrundfarbe repräsentiert sind;
Überabtasten der Bilddaten und Filtern der resultierenden Abtastwerte, um Alphawerte zu erzeugen, die einem Satz aus benachbarten Pixel-Teilkomponenten zugehörig sind und dem Merkmal des Zeichens entsprechen, wobei jeder Alphawert aus einem Satz der resultierenden Abtastwerte erzeugt wird und einer Pixel-Teilkomponente eines Pixels entspricht, wobei die erzeugten Alphawerte einen ersten Alphawert und einen zweiten Alphawert umfassen, wobei der erste und der zweite Alphawert verschiedenen Teilkomponenten (632, 633, 634) eines selben Pixels (640) entsprechen und aus verschiedenen Sätzen (626, 627, 629) der resultierenden Abtastwerte erzeugt werden; und
basierend auf dem Bestimmungsergebnis, Durchführen des Kompensationsvorgangs einschließlich Einstellen von mindestens einem der Alphawerte auf einen entsprechenden der erzeugten Alphawerte, um den offensichtlichen Kontrast zwischen der Vordergrundfarbe und der Hintergrundfarbe zu erhöhen, wenn das Zeichen auf der Anzeigevorrichtung angezeigt wird.

2. Verfahren nach Anspruch 1, wobei das Bestimmen, dass das Zeichen mit einem Merkmal angezeigt werden würde, das einen inakzeptabel niedrigen Kontrast aufweisen würde, das Identifizieren einer Schriftart umfasst, zu der das Zeichen gehört, oder das Untersuchen der Breite eines Grundstrichs des Zeichens.

3. Verfahren nach Anspruch 2, wobei das Bestimmen, dass das Zeichen mit einem Merkmal angezeigt werden würde, das einen inakzeptabel niedrigen Kontrast aufweisen würde, des Weiteren das Bestimmen umfasst, ob eine Pixelgröße, bei welcher eine Grundstrichbreite des Zeichens von einem Pixel in der Breite zu zwei Pixeln in der Breite übergeht, größer als ein vorausgewählter Pixelgrößen-Schwellenwert ist.

4. Verfahren nach einem der Ansprüche 1 bis 3, des Weiteren umfassend:
Anzeigen des Zeichens auf der Anzeigevorrichtung durch separates Steuern der Pixel-Teilkomponenten der Pixel unter Verwendung von Alphawerten, die damit korrespondieren, wobei mindestens eine der Pixel-Teilkomponenten unter Verwendung von mindestens einem Alphawert gesteuert wird, der in dem Kompensationsvorgang eingestellt wurde.

5. Verfahren nach einem der Ansprüche 1 bis 3, des Weiteren umfassend:
Anzeigen des Zeichens auf der Anzeigevorrichtung unter Verwendung der Alphawerte, was dazu führt, dass jede der Pixel-Teilkomponenten eines bestimmten Pixels, anstelle der gesamten Pixel, einen anderen Teil des Zeichens darstellt.

6. Verfahren nach einem der Ansprüche 1 bis 5, wobei das Einstellen von mindestens einem der Alphawerte das Verwenden von mindestens einem Alphawert als einen Index für eine Nachschlagetabelle umfasst und das Abrufen eines eingestellten Alphawertes aus der Nachschlagetabelle.

7. Verfahren nach einem der Ansprüche 1 bis 6, des Weiteren umfassend, nach dem Einstellen, das Zwischenspeichern der Alphawerte, einschließlich des mindestens einen Alphawertes, der eingestellt wurde, in einem Schriftart-Glyphen-Zwischenspeicher zur späteren Verwendung beim Zusammensetzen eines Bildes, das auf der Anzeigevorrichtung angezeigt werden soll.

8. Verfahren nach einem der Ansprüche 1 bis 7, wobei das Überabtasten der Bilddaten und das Filtern der resultierenden Abtastwerte umfasst:

Überabtasten der Bilddaten, in welchen das Zeichen durch eine Vordergrundfarbe und eine Hintergrundfarbe repräsentiert ist, durch Abrufen von mehreren Abtastwerten der Bilddaten für jede der Pixel-Teilkomponenten eines bestimmten Pixels; und

Filtern der Vielzahl von Abtastwerten, um Alphawerte für jede der Pixel-Teilkomponenten des bestimmten Pixels zu erhalten, wobei der Wert der einzelnen Alphawerte der Anzahl der entsprechenden Vielzahl von Abtastwerten entspricht, die der Vordergrundfarbe zugehörig sind; und

wobei das Durchführen des Kompensationsvorgangs des Weiteren umfasst:

Einstellen von mindestens einem der Alphawerte, um die Anzahl der entsprechenden Vielzahl von Abtastwerten effektiv zu erhöhen, die der Vordergrundfarbe zugehörig sind; und

Verwenden der Alphawerte, einschließlich des mindestens einen eingestellten Alphawertes, um das Zeichen auf der Anzeigevorrichtung anzuzeigen.

9. Verfahren nach Anspruch 8, wobei das Zeichen zu einer Schriftart "Courier New" gehört.

10. Verfahren nach Anspruch 8 oder 9, wobei das Einstellen von mindestens einem der Alphawerte umfasst:

Bestimmen, dass einige, jedoch weniger als alle, der Vielzahl von Abtastwerten, die einer bestimmten Pixel-Teilkomponente entsprechen, der Vordergrundfarbe zugehörig sind; und basierend auf dieser Bestimmung, Einstellen des Alphawertes der bestimmten Pixel-Teilkomponente, so dass alle der Vielzahl von Abtastwerten, die der bestimmten Pixel-Teilkomponente entsprechen, effektiv der Vordergrundfarbe zugeordnet werden.

11. Verfahren nach Anspruch 8 oder 9, wobei das Einstellen von mindestens einem der Alphawerte umfasst:

Bestimmen, dass keiner der Vielzahl von Abtastwerten, die der bestimmten Pixel-Teilkomponente entsprechen, der Vordergrundfarbe zugehörig ist, und dass alle der Vielzahl von Abtastwerten, die einer Pixel-Teilkomponente neben der bestimmten Pixel-Teilkomponente entsprechen, der Vordergrundfarbe zugehörig sind; und basierend auf dieser Bestimmung, Einstellen des Alphawertes der bestimmten Pixel-Teilkomponente, so dass mindestens einige der Vielzahl von Abtastwerten, die der bestimmten Pixel-Teilkomponente entsprechen, effektiv der Vordergrundfarbe zugeordnet werden.

12. Verfahren nach Anspruch 1, wobei das Einstellen von mindestens einem der Alphawerte umfasst:

Bereitstellen, an einem Datenspeichermedium an dem Verarbeitungssystem, einer Nachschlagetabelle zum Konvertieren von Sätzen aus Eingangsalphawerten, die den einzelnen Pixel-Teilkomponenten eines Pixels zugehörig sind, in Sätze aus Ausgangsalphawerten, die zum Steuern der Pixel-Teilkomponenten verwendet werden;

Indizieren der Nachschlagetabelle unter Verwendung eines Satzes aus Eingangsalphawerten, der die Eingangsalphawerte enthält, die den Pixel-Teilkomponenten eines bestimmten Pixels zugehörig sind, wobei der Satz aus Eingangsalphawerten durch Zuordnen einer Vielzahl von Abtastwerten der Bilddaten, die ein Zeichen definieren, zu jeder der Pixel-Teilkomponenten des bestimmten Pixels erzeugt wurde, wobei der Satz aus Eingangsalphawerten beinhaltet:

einen Eingangsalphawert, der aus mindestens einem Abtastwert der Bilddaten erhalten wird, die einer roten Pixel-Teilkomponente des bestimmten Pixels entsprechen; einen Eingangsalphawert, der aus mindestens einem Abtastwert der Bilddaten erhalten wird, die einer grünen Pixel-Teilkomponente des bestimmten Pixels entsprechen; einen Eingangsalphawert, der aus mindestens einem Abtastwert der Bilddaten erhalten wird, die einer blauen Pixel-Teilkomponente des bestimmten Pixels entsprechen; und

mindestens einen weiteren Eingangsalphawert, der aus mindestens einem Abtastwert der Bilddaten erhalten wird, die einer Pixel-Teilkomponente eines anderen Pixels neben dem bestimmten Pixel entsprechen; und

Erzeugen, anhand der Nachschlagetabelle, eines Satzes aus Ausgangsalphawerten, die den Pixel-Teilkomponenten des bestimmten Pixels zugehörig sind, wobei der Satz aus Ausgangsalphawerten die Dimension eines Zeichenmerkmals des Zeichens effektiv erhöht.

13. Verfahren nach Anspruch 12, wobei das Zeichenmerkmal ein Grundstrich ist, wobei das Verfahren des Weiteren umfasst:

Bestimmen, dass der Grundstrich andernfalls mit einem inakzeptabel niedrigen Kontrast in Abwesenheit der Erzeugung des Satzes von Ausgangsalphawerten angezeigt werden würde, wobei das Indizieren der Nachschlagetabelle basierend auf dieser Bestimmung durchgeführt wird.

14. Verfahren nach Anspruch 12 oder 13, wobei das Zeichen in den Bilddaten durch eine Vordergrundfarbe und eine Hintergrundfarbe definiert ist.

15. Verfahren nach Anspruch 14, wobei, wenn der Satz aus Eingangsindexwerten einen bestimmten Eingangsalphawert enthält, der anzeigt, dass einige, jedoch weniger als alle, der Vielzahl von Abtastwerten, die einer bestimmten Pixel-Teilkomponente entsprechen, der Vordergrundfarbe zugehörig sind: der Ausgangsalphawert, der dem bestimmten Eingangsalphawert entspricht, so ausgewählt wird, dass alle der Vielzahl von Abtastwerten, die der bestimmten Pixel-Teilkomponente entsprechen, effektiv der Vordergrundfarbe zugeordnet werden.

16. Verfahren nach Anspruch 14, wobei, wenn der Satz aus Eingangsindexwerten einen bestimmten Eingangsalphawert enthält, der anzeigt, dass keiner der Vielzahl von Abtastwerten, die einer bestimmten Pixel-Teilkomponente entsprechen, der Vordergrundfarbe zugehörig ist, und dass alle der Vielzahl von Abtastwerten, die einer Pixel-Teilkomponenten neben der bestimmten Pixel-Teilkomponente entsprechen, der Vordergrundfarbe zugehörig sind: der Ausgangsalphawert, der dem bestimmten Eingangsalphawert entspricht, so ausgewählt wird, dass mindestens einige der Vielzahl von Abtastwerten, die der bestimmten Pixel-Teilkomponente entsprechen, effektiv der Vordergrundfarbe zugeordnet werden.

17. Verfahren nach einem der Ansprüche 12 bis 16, wobei der mindestens eine andere Eingangsalphawert beinhaltet: einen Eingangsalphawert, der aus mindestens einem Abtastwert der Bilddaten erhalten wird, die einer blauen Pixel-Teilkomponente in einem ersten Pixel neben dem bestimmten Pixel entsprechen; und einen Eingangsalphawert, der aus mindestens einem Abtastwert der Bilddaten erhalten wird, die einer roten Pixel-Teilkomponente in einem zweiten Pixel neben dem bestimmten Pixel entsprechen.

18. Computerlesbares Medium mit computerausführbaren Befehlen zum Durchführen des Verfahrens nach einem der Ansprüche 1 bis 17 bei Ausführung auf einem Computer.

19. System zum Anzeigen eines Bildes, umfassend:

eine Verarbeitungseinheit (721); eine Anzeigevorrichtung (754) mit einer Vielzahl von Pixeln (640), wobei jedes Pixel eine Vielzahl von Pixel-Teilkomponenten (632, 633, 634) beinhaltet, die jeweils eine andere Farbe aufweisen; und ein Computerprogrammprodukt, das ein computerlesbares Medium nach Anspruch 18 enthält.

**Revendications**

1. Procédé pour régler efficacement une dimension d'une caractéristique de caractère afin d'augmenter la contraste de la caractéristique de caractère lorsqu'il est affiché sur un dispositif d'affichage (754) dans un système de traitement (700), le dispositif d'affichage comportant une pluralité de pixels (640) ayant chacun une pluralité de sous-composants de pixels (632, 633, 634) de couleurs différentes, le procédé comprenant les étapes suivantes:

déterminer qu'un caractère serait affiché avec une caractéristique ayant un contraste trop faible en l'absence d'une opération de compensation sur des données d'image qui incluent le caractère et dans lequel les caractères sont représentés par une couleur de premier plan et une couleur de fond; suréchantillonner les données d'image et filtrer les échantillons résultants pour générer des valeurs alpha qui sont associées à un ensemble de sous-composants de pixels adjacents et correspondent à la caractéristique du caractère, chaque valeur alpha étant générée à partir d'un ensemble d'échantillons résultants et correspondant à un sous-composant de pixel d'un pixel, les valeurs alpha générées comprenant une première valeur alpha et une seconde valeur alpha, la première valeur alpha et la seconde valeur alpha correspondant à différents sous-composants (632, 633, 634) d'un même pixel (640) et être générés à partir de différents ensembles (626, 627, 629) des échantillons résultants; et sur la base du résultat de la détermination, effectuer l'opération de compensation, y compris en réglant au moins l'une des valeurs alpha sur l'une respective desdites valeurs alpha générées afin d'augmenter le contraste apparent entre la couleur de premier plan et la couleur de fond affiché sur le périphérique d'affichage.

2. Procédé selon la revendication 1, dans lequel déterminer que le caractère serait affiché avec une caractéristique ayant un contraste trop faible consiste à identifier une police à laquelle appartient le caractère à examiner la largeur d'une tige du caractère.

3. Procédé selon la revendication 2, dans lequel déterminer que le caractère serait affiché avec une fonctionnalité présentant un contraste trop faible consiste en outre à déterminer si une taille de pixel à laquelle une largeur de tige du caractère passe d'un pixel de largeur à deux pixels de largeur est supérieure à un seuil de taille de pixel présélectionné.

4. Procédé selon l'une des revendications 1 à 3, comprenant en outre les étapes suivantes:

   afficher le caractère sur le dispositif d'affichage en contrôlant séparément les sous-composants de pixel pour les pixels utilisant des valeurs alpha qui leur correspondent, au moins l'un des sous-composants de pixels étant contrôlée en utilisant au moins une valeur alpha qui a été réglée lors de l'opération de compensation.

5. Procédé selon l'une des revendications 1 à 3, comprenant en outre les étapes suivantes:

   afficher le caractère sur le dispositif d'affichage en utilisant les valeurs alpha, avec pour conséquence que chacun des sous-composantes de pixel pour un pixel particulier, plutôt que des pixels entiers, va représenter une partie différente du caractère.

6. Procédé selon l'une des revendications 1 à 5, dans lequel régler au moins l'une des valeurs alpha consiste à utiliser ladite au moins une valeur alpha en tant qu'index pour un tableau de recherche et à obtenir une valeur alpha réglée à partir du tableau de recherche.

7. Procédé selon l'une des revendications 1 à 6, consistant en outre, après le réglage, à mettre en cache les valeurs alpha, y compris ladite au moins une valeur alpha qui a été réglée, dans un cache de glyphes de polices à utiliser ultérieurement pour assembler une image à afficher sur le dispositif d'affichage.

8. Procédé selon l'une des revendications 1 à 7, dans lequel le suréchantillonnage des données d'image et le filtrage des échantillons résultants comprend les étapes suivantes:

   suréchantillonner des données d'image dans lesquelles le caractère est représenté par une couleur de premier plan et une couleur de fond en obtenant plusieurs échantillons des données d'image pour chacun des sous-composants de pixels pour un pixel particulier; et filtrer les échantillons multiples pour obtenir des valeurs alpha pour chacun des sous-composants de pixel pour le pixel particulier, la valeur de chacune des valeurs alpha correspondant au nombre d'échantillons multiples correspondants associés à la couleur de premier plan; et le déroulement de l'opération de compensation comprend en outre les étapes suivantes:

      régler au moins une des valeurs alpha pour augmenter efficacement la nombre de plusieurs échantillons correspondants associés à la couleur de premier plan; et utiliser les valeurs alpha, y compris au moins une valeur alpha réglée, pour afficher le caractère sur le dispositif d'affichage.

9. Procédé selon la revendication 8, dans lequel le caractère appartient à une police Courier New.

10. Procédé selon les revendications 8 ou 9, dans lequel le réglage d'au moins l'une des alpha valeurs comprend les étapes suivantes:

    déterminer que certains, mais moins que tous les multiples échantillons correspondant à un sous-composant de pixel particulier sont associés à la couleur de premier plan; et sur la base de cette détermination, régler la valeur alpha dudit sous-composant du pixel particulier de sorte que tous les échantillons multiples correspondant au sous-composant de pixel particulier est effectivement associé à la couleur de premier plan.

11. Procédé selon les revendications 8 ou 9, dans lequel le réglage d'au moins l'une des alpha valeurs comprend les étapes suivantes:

    déterminer qu'aucun des multiples échantillons correspondant à un sous-composant de pixel particulier n'est associé à la couleur de premier plan et que tous les multiples échantillons correspondant à un sous-composant de pixel adjacent au sous-composant de pixel particulier sont associés à la couleur de premier plan; et sur la base de cette détermination, régler la valeur alpha dudit sous-composant du pixel particulier de sorte qu'au moins certains des échantillons multiples correspondant au sous-composant de pixel particulier sont alors effectivement associé à la couleur de premier plan.

12. Procédé selon la revendication 1, dans lequel le réglage d'au moins l'une des alpha valeurs comprend les étapes suivantes:

    fournir, sur un support de données au niveau du système de traitement, une table de consultation pour convertir des ensembles de valeurs alpha d'entrée associées à des sous-composants de pixel individuels pour un pixel, avec des ensembles de valeurs alpha de sortie utilisées pour contrôler les sous-composants de pixel; indexer la table de consultation à l'aide d'un ensemble de valeurs alpha d'entrée qui incluent des valeurs alpha d'entrée associées aux sous-composantes de pixel pour un pixel particulier, l'ensemble de valeurs alpha d'entrée ayant été généré en mappant plusieurs échantillons de données d'image définissant un caractère pour chaque sous-composant de pixel pour le pixel particulier, l'ensemble des valeurs alpha d'entrée comprenant:

une valeur alpha d'entrée obtenue à partir d'au moins un échantillon des données d'image correspondant à un sous-composant de pixel rouge pour le pixel particulier; une valeur alpha d'entrée obtenue à partir d'au moins un échantillon des données d'image correspondant à un sous-composant de pixel vert pour le pixel particulier; une valeur alpha d'entrée obtenue à partir d'au moins un échantillon des données d'image correspondant à un sous-composant de pixel bleu pour le pixel particulier; et au moins une valeur alpha d'entrée obtenue à partir d'au moins un échantillon des données d'image correspondant à un sous-composant de pixel d'un autre pixel adjacent au pixel particulier; et

générer, à partir du tableau de consultation, un ensemble de valeurs alpha de sortie associées aux sous-composants de pixel pour le pixel particulier, l'ensemble de valeurs alpha de sortie augmentant efficacement la dimension d'une caractéristique de caractère pour ledit caractère.

13. Procédé selon la revendication 12, dans lequel la caractéristique de caractère est une tige, le procédé comprenant en outre l'étape suivante:
déterminer que la tige serait sinon affichée avec un contraste trop faible en l'absence de la génération de l'ensemble de valeurs alpha de sortie, l'indexation de la table de consultation étant effectuée sur la base de ladite détermination.

14. Procédé selon les revendications 12 ou 13, dans lequel le caractère est défini dans les données d'image par une couleur de premier plan et une couleur de fond.

15. Procédé selon la revendication 14, dans lequel, lorsque l'ensemble de valeurs d'index d'entrée comprend une valeur alpha d'entrée particulière qui indique que certains, mais moins que tous les multiples échantillons correspondant à un sous-composant de pixel particulier sont associés à la couleur de premier plan:
la valeur alpha de sortie correspondant à la valeur alpha d'entrée particulière est sélectionnée de sorte que tous les échantillons multiples correspondant au sous-composant de pixel particulier deviennent effectivement associés à la couleur de premier plan.

16. Procédé selon la revendication 14, dans lequel, lorsque l'ensemble de valeurs d'index d'entrée comprend une valeur alpha d'entrée particulière qui indique qu'aucun des échantillons multiples correspondant à un sous-composant de pixel particulier n'est associé à la couleur de premier plan et que tous les multiples échantillons correspondant à un sous-composant de pixel adjacent au sous-composant de pixel particulier sont associés à la couleur de premier plan:
la valeur alpha de sortie correspondant à la valeur alpha d'entrée particulière est sélectionnée de sorte qu'au moins certains des échantillons multiples correspondant au sous-composant de pixel particulier deviennent effectivement associés à la couleur de premier plan.

17. Procédé selon l'une des revendications 12 à 16, dans lequel ladite au moins une autre valeur alpha d'entré comprend:

une valeur alpha d'entrée obtenue à partir d'au moins un échantillon des données d'image correspondant à un sous-composant de pixel bleu dans un premier pixel adjacent au pixel particulier; et
une valeur alpha d'entrée obtenue à partir d'au moins un échantillon des données d'image correspondant à un sous-composant de pixel rouge dans un second pixel adjacent au pixel particulier.

18. Support lisible par ordinateur portant des instructions exécutables par ordinateur pour effectuer le procédé selon l'une quelconque des revendications 1 à 17 lorsque lesdites instructions sont exécutées sur un ordinateur.

19. Système d'affichage d'une image, comprenant:

une unité de traitement (721);
un dispositif d'affichage (754) ayant une pluralité de pixels (640), chaque pixel comprenant une pluralité de sous-composants de pixels (632, 633, 634), chacun d'une couleur différente; et
un produit de programme d'ordinateur comprenant un support lisible machine selon la revendication 18.

FIG. 1
(PRIOR ART)

C (N)    C (N+1)    C (N+2)

223

R (N)

222

R (N+1)

R (N+2)

220

232    234    236

240

230

FIG. 2
(PRIOR ART)

FIG. 3
(PRIOR ART)

FIG. 4
(PRIOR ART)

FIG. 5
(PRIOR ART)

FIG. 6

FIG. 7

930

932    934    936    938

SCALED
IMAGE

1002

SAMPLE
IMAGE

| 00 | 00 | 00 | 00 | 11 | 11 | 00 | 00 | 00 | 00 | 00 | 00 |

| 0 | 0 | 0 | 0 | 2 | 2 | 0 | 0 | 0 | 0 | 0 | 0 |

INTERMEDIATE
$\alpha$ VALUES

1004

1006

FILTERED
$\alpha$ VALUES

| 2 | 4 | 4 | 2 | 0 | 0 |

1008

1034    1038

FIG. 8

1102    1106    1108

INTERMEDIATE $\alpha$
VALUE ANNOTATION

| $k_R^{(P)}$ | $k_G^{(P)}$ | $k_B^{(P)}$ | $k_R^{(C)}$ | $k_G^{(C)}$ | $k_B^{(C)}$ | $k_R^{(S)}$ | $k_G^{(S)}$ | $k_B^{(S)}$ |

1101

1104

FILTERED
$\alpha$ VALUES

| $K_R^{(F)}$ | $K_G^{(F)}$ | $K_B^{(F)}$ |

1106

FIG. 9

26

FIG. 10

FIG. 11

EP 1 226 508 B1

FIG. 12

EP 1 226 508 B1

1700

| IMAGE BLOATING RULE TABLE | |
|---|---|
| INTERMEDIATE $\alpha$ VALUE BEFORE BLOATING | INTERMEDIATE $\alpha$ VALUE AFTER BLOATING |
| 1 | 2 |
| 2 | 2 |
| 0 NEXT TO A 2 | 1 |
| 0 NOT NEXT TO A 2 | 0 |

FIG. 13

IMAGE SAMPLES
INTERMEDIATE $\alpha$ VALUES

BEFORE

| 00 | 01 | 00 | 00 | 00 |
|----|----|----|----|----|

| 0 | 1 | 0 | 0 | 0 |
|---|---|---|---|---|

AFTER

| 00 | 11 | 00 | 00 | 00 |
|----|----|----|----|----|

| 0 | 2 | 0 | 0 | 0 |
|---|---|---|---|---|

FIG. 14

IMAGE SAMPLES
INTERMEDIATE $\alpha$ VALUES

BEFORE

| 00 | 11 | 00 | 00 | 00 |
|----|----|----|----|----|

| 0 | 2 | 0 | 0 | 0 |
|---|---|---|---|---|

AFTER

| 01 | 11 | 10 | 00 | 00 |
|----|----|----|----|----|

| 1 | 2 | 1 | 0 | 0 |
|---|---|---|---|---|

FIG. 15

IMAGE SAMPLES
INTERMEDIATE $\alpha$ VALUES

BEFORE

| 00 | 11 | 10 | 00 | 00 |
|----|----|----|----|----|

| 0 | 2 | 1 | 0 | 0 |
|---|---|---|---|---|

AFTER

| 01 | 11 | 11 | 00 | 00 |
|----|----|----|----|----|

| 1 | 2 | 2 | 0 | 0 |
|---|---|---|---|---|

FIG. 16

2100

$k_B^{(P)}$ →

$k_R^{(C)}$ →

$k_G^{(C)}$ →    IMAGE    $k_B^{(PB)}$

$k_B^{(C)}$ →    BLOATING    $k_R^{(CB)}$

$k_R^{(S)}$ →    LOOK-UP    $k_G^{(CB)}$

TABLE    $k_B^{(CB)}$

$k_R^{(SB)}$

1200

IMAGE
FILTERING
LOOK-UP
TABLE

→ $k_R^{(F)}$

→ $k_G^{(F)}$

→ $k_B^{(F)}$

→ $c_K^{(F)}$

## FIG. 17

2200

$k_B^{(P)}$ →

$k_R^{(C)}$ →

$k_G^{(C)}$ →    IMAGE
BLOATING / FILTERING
LOOK-UP
TABLE

$k_B^{(C)}$ →

$k_R^{(S)}$ →

→ $K_R^{(F)}$

→ $K_G^{(F)}$

→ $K_B^{(F)}$

→ $c_K^{(F)}$

## FIG. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0786757 A
- US 36464799 A
- US 364647 A